# EUROPEAN PATENT SPECIFICATION

(11) **EP 3 715 993 B1**
(45) Date of publication and mention of the grant of the patent: **14.09.2022**
(21) Application number: 19164936.7
(22) Date of filing: 25.03.2019
(51) Int. Cl.: G05D 1/02, B66C 13/46, B66C 13/48

(54) **A VEHICLE COMPRISING A WORKING EQUIPMENT, AND A WORKING EQUIPMENT, AND A METHOD IN RELATION THERETO**
FAHRZEUG MIT EINER ARBEITSAUSRÜSTUNG SOWIE EINE ARBEITSAUSRÜSTUNG UND EIN VERFAHREN IM ZUSAMMENHANG DAMIT
VÉHICULE COMPRENANT UN ÉQUIPEMENT DE TRAVAIL, ÉQUIPEMENT DE TRAVAIL ET PROCÉDÉ ASSOCIÉ

(43) Date of publication of application: 30.09.2020
(73) Proprietor: Hiab AB, 164 22 Kista (SE)
(72) Inventor: LYNGBÄCK, Hans, 824 50 Hudiksvall (SE); GUSTAFSSON, Per, 824 42 HUDIKSVALL (SE)
(74) Representative: Bjerkén Hynell KB

(56) References cited:
- WO-A1-2018/169467
- US-A1- 2004 193 348
- US-A1- 2018 329 425

## Description

### Technical field

The present disclosure relates to a vehicle comprising a working equipment, e.g. a loader crane or a hook-lift, and to a working equipment structured to be mounted on a vehicle. The disclosure also relates to a method in relation to the vehicle, or the working equipment.

### Background

A vehicle may be equipped with different working equipment, such as a loader crane or a hook-lift (also called a demountable), to perform certain working tasks.

With a hook-lift mounted on a vehicle, such as a truck, the vehicle may load and unload objects like flatbeds, dumpster bodies, and similar containers. Various applications within waste-handling, recycling, scrap and demolition industries are then available.

Another example of a vehicle equipped with a working equipment is a truck with a crane, e.g. a loader crane or a forest crane. As the working equipment is mounted on a movable vehicle, the position and direction of the working equipment relative the object of the working procedure is depending on the position and sometimes also the direction of the vehicle. In order to achieve a viable, or optimal workflow, for the working equipment the vehicle position relative to the object (and also the surrounding) often needs to be adjusted. Today this is managed by the driver of the vehicle, and it is the experience and knowledge of the driver that determines the success and safety of the work that is performed by the vehicle and working equipment. Other factors such as the time spent on a working task and the wear and tear of the working equipment is also affected by the driver's choices during a working assignment.

The present disclosure is focused on how to enable autonomous, or semi-autonomous (the system generates driving instructions to aid the driver), handling of an object by a vehicle using a working equipment, and in particular on how to generate driving instructions towards a target in the surrounding of the object to be handled. For example; when loading on a flatbed on a truck, the truck needs to be aligned with the flatbed and in order to get in that position the truck normally needs to move in a straight line towards the flatbed at least at the final distance. A target may hence be a position located at a predetermined distance from the attachment means of the flatbed so that the truck may move in a straight line towards the flatbed from the target point.

A problem with vehicles such as transport vehicles, heavy vehicles etc. is that the reaction of a driving instruction on the vehicle is dependent on the current characteristics of the vehicle and its surrounding environment. A truck will e.g. behave differently on a slippery surface compared to a dry road, depending on how many wheels are in contact with the ground, depending on the load on the truck etc. Therefore, it is difficult to generate driving instructions on a general basis.

In the following some documents within the same technical field as the present disclosure will be presented and briefly discussed.

US20170369101 discloses a maneuvering system for maneuvering a predetermined part of a vehicle into a target position provided by a target object. A first optical sensor arranged at the vehicle captures the target object and a trajectory is calculated. A second optical sensor arranged at a different position on the vehicle also captures the target object. The image from the second optical sensor can be used to refine the trajectory or can be used independently if e.g. the first sensor fails.

US20160378118 discloses a method for autonomously aligning a tow hitch ball on a towing vehicle and a drawbar on a trailer. The drawbar is identified as the target and a template pattern around the drawbar is created. The method predicts a new location of the target as the vehicle moves and identifies the target in new images as the vehicle moves by comparing the previous template pattern with an image patch around the predicted location.

US20160075281 discloses a vehicle hitch assistance system to align a tow hitch mounted on the vehicle with a trailer coupling mounted to a trailer. The hitch assistance system comprises an imaging system that is provided to generate image data to identify obstructions proximal to the vehicle and/or to the trailer. Further, the imaging system together with a processor is used to capture and analyze image data of the trailer coupling (target) to guide the vehicle towards the trailer coupling by modifying a steering guidance signal, i.e. the steering wheel angle.

US20160288833 discloses a vehicle with a parking assistance system that detects a garage and a current position of the vehicle relative to the garage. The parking process is carried out automatically, steering the vehicle based on data from vehicle-mounted cameras that captures images of the garage and at least one distance sensor.

DE10350923 discloses a method for reversing a vehicle with a trailer to a position beneath a target object, i.e. a support frame for a container. The path is determined after the target object is detected by a captured image.

US20180039278 discloses an iterative method for detecting a target and determining the travel path, wherein the target position and the object position are coordinated with one another. The iterative method makes it possible to introduce every point in time during the traveling along the travel path, such that parameters can be adapted to varying ambient conditions and/or more accurate knowledge by the camera and/or the vehicle position. US20170158227 discloses a vehicle steering arrangement in an autonomous vehicle which vehicle steering arrangement's steering characteristics is adapted to a monitored driving environment.

US20080024608 discloses a method for visualizing the surroundings of a vehicle to the driver, wherein the image output to the driver is adapted depending on e.g. current weather.

US20180329425 relates to a method including receiving instructions to pick up an object with one or more lift elements of an autonomous vehicle. The vehicle is part of a robotic warehouse fleet.

US20040193348 relates to method and system for efficiently traversing an area with a work vehicle.

An object of the present invention is to achieve an improved vehicle, working equipment, and method where the improvement lies in that the safety of the work performed by the vehicle and working equipment is less dependent upon the experience and knowledge of the driver, and in particular to achieve an improved vehicle and method where parameters of the surroundings around the vehicle, and of the vehicle, are taken into account when controlling the vehicle.

### Summary

The above-mentioned object is achieved by the present invention according to the independent claims.

Preferred embodiments are set forth in the dependent claims.

According to a first aspect the present invention relates a vehicle (2) comprising a working equipment (4), and further comprising a sensor system (6) configured to capture environmental data reflecting the environment around the vehicle and to determine, based on said data, image data (8) representing an area at least partly surrounding the vehicle (2), a vehicle data unit (12) configured to determine vehicle data (14) representing characteristics of the vehicle (2), and a control unit (16) configured to receive said image data (8), and said vehicle data (14), and to determine and generate control signals (18) for controlling said vehicle (2), wherein said control signals (18) comprise driving instructions. The control unit (16) is configured to receive a working task to be performed by the vehicle, wherein said working task includes information of an object (20) for the vehicle (2) to reach when performing said working task. The control unit (16) is configured to:
- determine a target position (22), being a position based on the location of the object (20) to reach when performing said working task in said image data representation, in relation to said vehicle (2),
- calculate at least a first path (24) from the vehicle (2) to the target position (22) by applying a set of path calculation rules,
- determine driving instructions such that said vehicle (2) is controlled to follow said at least first path (24), wherein said driving instructions are determined in dependence of said image data (8), and vehicle data (14), by applying a set of path following rules.

A vehicle according to the present invention will achieve an improved capability when moving towards an object. Preferably, this is achieved by taken into account numerous external parameters and also internal vehicle related parameters in order to determine a path for the vehicle to follow towards the object, and to control the vehicle to follow the path. Thus, the present invention provides a technique to safely control the vehicle taken numerous parameters into account, which is particularly advantageous if the vehicle is an autonomous or semi-autonomous vehicle. The technique also provides an improved accuracy in the determined driving instructions, which increases the safety of the driving process.

According to the invention the sensor system is also configured to determine ambient condition data, and that the control unit is also configured to receive the ambient condition data. The control unit is further configured to determine driving instructions such that the vehicle (2) is controlled to follow said at least first path (24), and that the driving instructions are determined in dependence of the image data (8), ambient condition data (10), and vehicle data (14), by applying said set of path following rules.

According to the invention the ambient condition data (10) comprises at least a ground surface parameter, e.g. a friction value, of the ground surface at the current position of the vehicle (2), and wherein one path following rule comprises using said ground surface parameter. This is advantageous because the vehicle may then be safely controlled even if moved on a slippery ground.

According to another embodiment the control unit (16) is configured to repeatedly determine the target position (22), calculate at least the first path (24), and determine the driving instructions, until the vehicle (2) has reached the target position (22). Thereby, the vehicle will be arranged to adapt to situations where e.g. the external conditions vary, which may be the case if the ground conditions changes along the path.

According to still another embodiment the control unit (16) is configured to identify at least one reference point (26) in said image data representation, wherein said reference point (26) represents a fixed object in the environment surrounding the vehicle (2) that is easy to identify, and not being the object (20) for the vehicle (2) to reach, and to apply said at least one reference point (26) when calculating said at least one first path (24), and wherein said at least one reference point (26) is identified and applied during movement along said at least one first path (24) in order to follow said at least one first path (24).

This embodiment will increase the accuracy when determining the position of the vehicle along the path, and will then enable to fine-tune the movements of the vehicle.

According to a second aspect of the present invention a working equipment structured to be mounted on a vehicle is provided. The working equipment comprises a sensor system (6) configured to capture environmental data reflecting the environment around the working equipment and the vehicle when mounted on the vehicle, and to determine, based on said data, image data (8) representing an area at least partly surrounding the working equipment and the vehicle (2). The working equipment further comprises a vehicle data unit (12) configured to determine vehicle data (14) representing characteristics of the vehicle (2), and a control unit (16) configured to receive said image data (8), and said vehicle data (14), and to determine and generate control signals (18) for controlling said vehicle (2), wherein said control signals (18) comprise driving instructions,

The control unit (16) is configured to receive a working task to be performed by the working equipment when mounted on said vehicle, wherein said working task includes information of an object (20) for the vehicle (2) to reach when performing said working task. The control unit (16) is configured to:
- determine a target position (22), being a position based on the location of the object (20) to reach when performing said working task in said image data representation, in relation to said vehicle (2),
- calculate at least a first path (24) from the vehicle (2) to the target position (22) by applying a set of path calculation rules,
- determine driving instructions such that said vehicle (2) is controlled to follow said at least first path (24), wherein said driving instructions are determined in dependence of said image data (8), and vehicle data (14), by applying a set of path following rules.

Several embodiments of the second aspects are provided, and it is herein referred to the embodiments discussed above in relation to the vehicle which are applicable also in relation to the working equipment. Further, by having such functionality in the working equipment it implies that a working vehicle may be adapted to a specialized type of working assignments by adding the working equipment for it.

According to a third aspect of the present invention a method in relation to a vehicle comprising a working equipment is provided, or a method in relation to a working equipment structured to be mounted on a vehicle. The vehicle or working equipment comprises:
- a sensor system configured to capture environmental data reflecting the environment around the vehicle and/or the working equipment and to determine, based on said data, image data representing an area at least partly surrounding the vehicle and/or the working equipment,
- a vehicle data unit configured to determine vehicle data representing characteristics of the vehicle,
- a control unit configured to receive said image data, and said vehicle data, and to determine and generate control signals for controlling said vehicle, wherein said control signals comprise driving instructions,
- the control unit is configured to receive a working task to be performed by the vehicle, wherein said working task includes information of an object for the vehicle to reach when performing said working task.

The method comprises:
- determining a target position, being a position based on the location of the object to reach when performing said working task in said image data representation, in relation to said vehicle,
- calculating at least a first path from the vehicle to the target position by applying a set of path calculation rules,
- determining driving instructions such that said vehicle is controlled to follow said at least first path, wherein said driving instructions are determined in dependence of said image data, and said vehicle data, by applying a set of path following rules.

When applying a method according to the present invention on a vehicle, or on a working equipment when mounted on a vehicle, the vehicle will achieve an improved capability when moving towards an object as numerous external parameters and also internal vehicle related parameters will be taken into account in order to determine a path for the vehicle to follow towards the object, and to control the vehicle to follow the path.

According to the invention the sensor system is further configured to determine ambient condition data, and that the control unit is further configured to receive the ambient condition data. The method then further comprises determining driving instructions such that the vehicle is controlled to follow the at least first path, wherein the driving instructions are determined in dependence of the image data, ambient condition data, and vehicle data, by applying said set of path following rules.

According to the invention the method comprises that the ambient condition data comprises at least a ground surface parameter, e.g. a friction value, of the ground surface at the current position of the vehicle, and wherein one path following rule comprises using said ground surface parameter. This is advantageous because the vehicle may then be safely controlled even if moved on a slippery ground.

In another embodiment the method further comprises repeatedly determining the target position, calculating at least the first path, and determining the driving instructions, until the vehicle has reached the target position. Thereby, the vehicle will be arranged to adapt to situations where e.g. the external conditions vary, which may be the case if the ground conditions changes along the path.

In still another embodiment the method comprises identifying at least one reference point in said image data, wherein said reference point represents a fixed object in the environment surrounding the vehicle that is easy to identify, and not being the object for the vehicle to reach, and applying said at least one reference point when calculating said at least one first path, and wherein said at least one reference point is identified and applied during movement along said at least one first path in order to follow said at least one first path. This embodiment will increase the accuracy when determining the position of the vehicle along the path, and will then enable to fine-tune the movements of the vehicle.

### Brief description of the drawings

Figure 1 is an overview illustration schematically illustrating a vehicle according to the present invention.
Figure 2 is a schematic illustration of a view based on data from the sensor system of an embodiment of the vehicle according to the present invention.
Figure 3 is block diagram schematically illustrating the vehicle according to the present invention.
Figure 4 is block diagram schematically illustrating the working equipment according to the present invention.
Figure 5 is a flow diagram illustrating the method according to the present invention.

### Detailed description

The vehicle, the working equipment, and the method in relation to the vehicle/working equipment, will now be described in detail with references to the appended figures. Throughout the figures the same, or similar, items have the same reference signs. Moreover, the items and the figures are not necessarily to scale, emphasis instead being placed upon illustrating the principles of the invention.

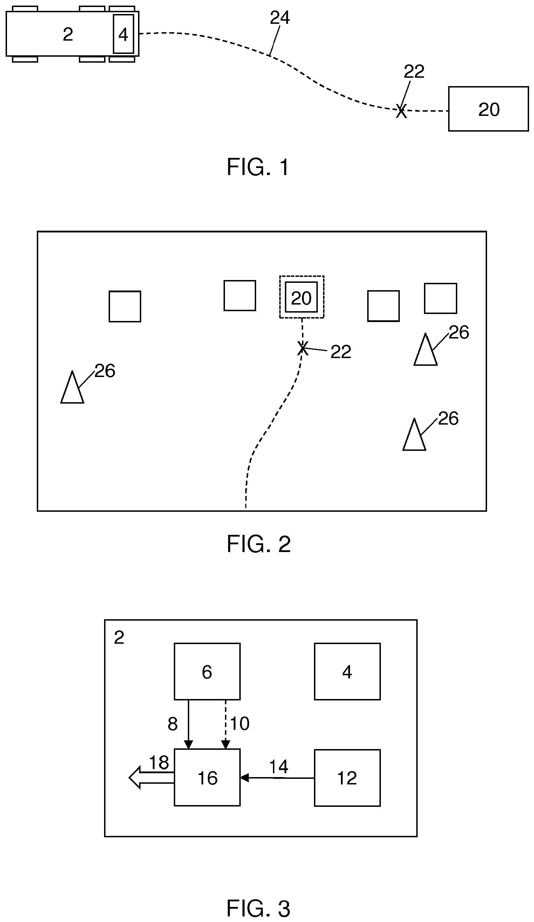

With reference to figures 1-3 a vehicle 2 comprising a working equipment 4 is provided. The vehicle may be equipped with different working equipment, such as a loader crane or a hook-lift (also called a demountable), to perform certain working tasks. Another example is a truck equipped with a tail lift backing up to a loading platform.

With a hook-lift mounted on a vehicle, the vehicle may load and unload objects like flatbeds, dumpster bodies, and similar containers. Various applications within waste-handling, recycling, scrap and demolition industries are then available. Another example of a vehicle equipped with a working equipment is a truck with a crane e.g. a loader crane or a forest crane. The vehicle may be an autonomous vehicle, or a semi-autonomous vehicle. A semi-autonomous vehicle is a vehicle where an operator to a certain degree is involved in the operation of the vehicle, e.g. the operator receives operating instructions via an interface, e.g. a graphical user interface or via computer generated audial or tactile instructions.

The vehicle comprises a sensor system 6 configured to capture environmental data reflecting the environment around the vehicle and to determine, based on the data, image data 8 representing an area at least partly surrounding the vehicle 2, and optionally ambient condition data 10.

The vehicle further comprises a vehicle data unit 12 configured to determine vehicle data 14 representing characteristics of the vehicle 2.

Furthermore, the vehicle also comprises a control unit 16 configured to receive the image data 8, and the vehicle data 14, and optionally the ambient condition data 10, and to determine and generate control signals 18 for controlling the vehicle 2, wherein the control signals 18 comprise driving instructions.

The control unit is provided with a communication interface and is connected to a common data bus, e.g. a CAN bus, and is configured to perform bidirectional communication, e.g. comprising sensor signals, to other units. Further protocols based on CAN may be applied, like application layer protocols such as SAE J1939 for in-vehicle networks for buses and trucks may further be used for the communication. As an alternative various protocols based on Ethernet and similar standards may be used such as Broad R Reach. Within a system with working units mounted on a vehicle various communication protocols may be used in different parts of the system.

The control unit is configured to determine control signals 18 for controlling various devices and means required to operate the vehicle, and the control unit disclosed herein comprises the necessary processing capacity to perform its intended task and comprises necessary data storage capabilities, and communication capabilities to support the task. The control unit may comprise distributed processing entities, and it is provided with the necessary processing capacity to perform all tasks discussed herein in relation to the vehicle. The control unit may be decentralized, i.e. divided into several sub-control units, and is provided with one or many memory units. It is also provided with communication capabilities, both via physical connections and wireless connections.

The control unit 16 is configured to receive a working task to be performed by the vehicle, wherein the working task includes information of an object 20 for the vehicle 2 to reach when performing said working task. As discussed above, the object 20 may be flatbeds, dumpster bodies, and similar containers. A working task may include information regarding where a specific object is located, the type of object, what to do with the object, and where to transport the object.

The control unit 16 is configured to:
- determine a target position 22 (marked with an X in figures 1 and 2), being a position based on the location of the object 20 to reach when performing the working task in the image data representation, in relation to the vehicle 2,
- calculate at least a first path 24 from the vehicle 2 to the target position 22 by applying a set of path calculation rules,
- determine driving instructions such that the vehicle 2 is controlled to follow the at least first path 24, wherein the driving instructions are determined in dependence of the image data 8, ambient condition data 10, and vehicle data 14, by applying a set of path following rules.

The at least first path is a trajectory along which the vehicle could move to the target position. In the figure only one path is shown. However, it is possible to calculate a number of different paths and present the different paths to an operator that may choose one of the paths.

The target position may be the position of the object or may be a position located a predetermined distance from the location of the object for the vehicle to reach when performing said working task. The target position may be dependent upon the type of working equipment. If e.g. the working equipment is a hook-lift the position of the hook at the vehicle in relation to a connection bar at a container to be handled, may be used to determine the target position. A target position may also be a position beside the object which would be the case if the object is a bin and the working equipment is a lifting arrangement such as a crane or another type of lifting arrangement at one side of the vehicle.

According to one embodiment the control unit is configured to determine driving instructions such that the vehicle 2 is controlled to follow the at least first path 24, wherein the driving instructions are determined in dependence of the image data 8, ambient condition data 10, and vehicle data 14, by applying a set of path following rules.

In one embodiment the ambient condition data 10 comprises at least a ground surface parameter, e.g. a friction value, of the ground surface at the current position of the vehicle 2, and wherein one path following rule comprises using said ground surface parameter. The ground surface parameter is measured by a dedicated sensor included in the sensor system. In one variation a contactless friction sensor may be used, in another variation a combination between signals from optical sensors and temperature sensors may be used.

In a further embodiment the control unit 16 is configured to repeatedly determine the target position 22, calculate at least the first path 24, and determine the driving instructions, until the vehicle 2 has reached the target position 22.

Based on the location of the object in relation to the current position of the vehicle a path towards the object may be generated. A number of possible paths may guide the vehicle towards the object and one that fits the characteristics of the vehicle, and the object to be loaded may be chosen.

According to a further embodiment the control unit 16 is configured to identify at least one reference point 26 in the image data representation.

Figure 2 illustrates an example of an image data representation where three reference points 26 are shown. In addition five possible objects are shown where one object 20 is the object intended to be handled. This object is indicated by a dashed square around the object. Example objects may be of same type, e.g. flatracks, all identified by the sensor system. One object may then be selected by e.g. an operator (which is an example of a working instruction). Or by further identifying a specific object and matching to a working instruction. Any object of an object type may be a working instruction as well as a selection of a specific object.

The at least one reference point 26 represents a fixed object in the environment surrounding the vehicle 2 that is easy to identify, and not being the object 20 for the vehicle 2 to reach. The at least one reference point 26 is applied when calculating the at least one first path 24, and identified and applied during movement along the at least one first path 24 in order to follow the at least one first path 24. Using one or many reference points improves the accuracy in following the first path, in that the reference point is used to determine the resulting motion of the driving instructions to be able to fine-tune the next set of driving instructions. In particular, using one or many reference points not being the target object has the following advantages:
- Separate reference point(s) will improve the accuracy as an additional point.
- Reference point(s) may be selected as an object that is easily detected and measured distance to, specifically in directions that differ from the moving direction of the vehicle.
- If the reference point(s) is/are located at closer distance accuracy is improved.

In a further embodiment the control unit 16 is configured to determine the location of the object 20 for the vehicle 2 to reach when performing the working task in the image data representation, either as a result of manual input of an operator, or through an image analysis. A manual input of an operator may be performed by pointing at an object to be handled on a touch screen showing the image data representation where the object, e.g. among a plurality of objects, is shown.

If an image analysis is performed the control unit is configured to detect candidate objects, and (optionally) further to identify a particular object, and (optionally) using object type information included in the received working task.

The sensor system 6 comprises one or many of radar, LIDAR, 3D cameras, cameras, lasers, thermal cameras, or any other sensing device capable of capturing information reflecting the surroundings around the vehicle. The image data being data organized in a matrix to describe the spatial relationship of the surrounding with respect to what the sensor system 6 is measuring. The various sensor units of the sensor system may be used for various applications and may in addition to a sensor component comprise additional hardware and software for analyzing measurements performed or samples gathered by the sensor component. The image data 8, may hence comprise measurement values, and results of analysis of measurement values on various complexity levels. A 3D camera may for example generate a sensor signal corresponding to an object identified as an object to be loaded and the coordinates of this object, whereas a laser unit may generate a sensor signal corresponding to a distance to an object in a predetermined direction. As a further example a sensor unit may be a sensor for reading information coded in RFID tags, bar codes, QR-codes or other similar codes or tags. An object to be loaded may e.g. be marked with such a tag describing the ID of the object, the weight of the object etc.

The vehicle data 14 describes the current characteristics of the vehicle and comprises one or many of the number of wheels in contact with the ground, the location of wheels in contact with the ground relative to the vehicle, the weight of the vehicle, which may be the total weight including load, the center of mass of the vehicle, and the type of tires. The vehicle data unit comprises various sensors for gathering information about the current state of the vehicle. These various sensors may be temperature sensors, sensors for estimating the weight of the vehicle, the center of mass of the vehicle, etc.

The set of path following rules comprises rules related to the movement of the vehicle along the path, related to e.g. the steering angle of the steering wheels, and then including steering angle limitations; the vehicle velocity including vehicle velocity limitations, the orientation of the vehicle along the path and in particular when approaching the object, etc.

The driving instructions may include at least a steering angle to the steering wheels of the vehicle 2 to be applied to the vehicle steering actuators, or instructions to a driver to perform a steering activity. The driving instructions may also include a vehicle velocity parameter, including a velocity and also a direction of movement. Thus, a driving instruction may be an instruction for any type of movement of the vehicle, or sequence of movements. It may be for driving the vehicle in forward direction or in reverse. More particularly, a velocity or direction of the vehicle is achieved by generating driving instructions including turning the steering wheel more/less to the left or right. The path following rules are used to get information about how the vehicle should move to reach the target. The driving instructions are then about how to make the vehicle move accordingly. So the vehicle characteristics and the ambient conditions affect the driving instructions. The driving instructions could be relative, i.e. increase/decrease a steering angle, or absolute i.e. this parameter should be set to that value.

A driving instruction may be visualized in different ways on a display for an operator in a semi-autonomous mode.

The driving instruction that is generated to guide the vehicle towards the target comprises at least a steering angle. By also identifying reference points in the image data representation the reaction of a first driving instruction may be deduced from subsequently captured image representations and used as input to adapt a second driving instruction and further, optionally, the path towards the target.

By storing the received vehicle data together with extracted data describing a change in position of the vehicle due to the first driving instruction, the relationship may later be used to generate or adapt a third driving instruction. This type of data and relationship between the data may hence be used as training data for a neural network.

The set of path calculation rules comprises calculation rules required to obtain a path for the vehicle to follow from its present position to the object. The set of rules may comprise rules related the distance to the object, and various vehicle parameters, e.g. the length, the weight, the steering radius, and the orientation of the vehicle. In order to calculate the at least one path a library of stored paths may be applied based upon previously applied paths. Among the stored paths one may be chosen being one that fits the present situation the best - the chosen path may then be adapted to the present situation.

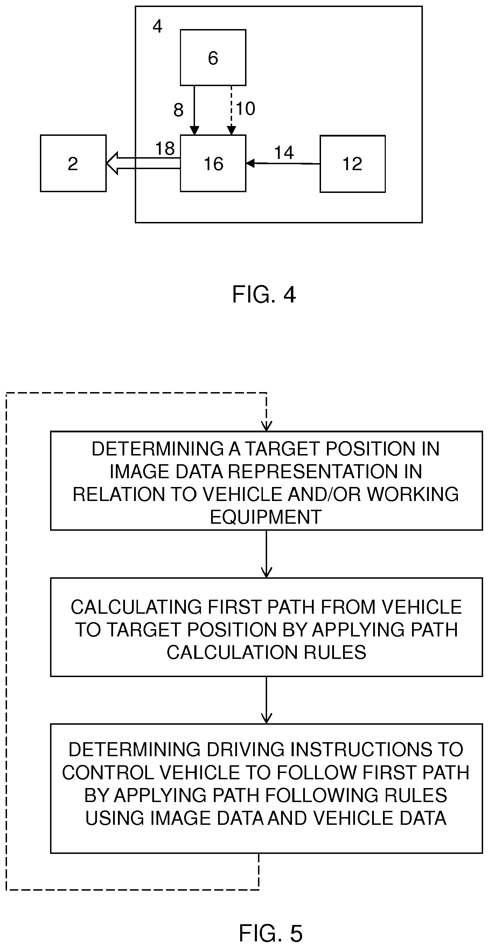

With references to the block diagram illustrated in figure 4 the present invention also relates to a working equipment 4 structured to be mounted on a vehicle 2. Various types of working equipment has been exemplified above.

The working equipment comprises a sensor system 6 configured to capture environmental data reflecting the environment around the working equipment and vehicle when mounted on the vehicle, and to determine, based on said data, image data 8 representing an area at least partly surrounding the working equipment and the vehicle (2). The sensor system comprises one or many sensors which has been exemplified above in relation to the description of the vehicle. The one or many sensors may be mounted at the working equipment and/or at the vehicle.

The working equipment further comprises a vehicle data unit 12 configured to determine vehicle data 14 representing characteristics of the vehicle 2, e.g. by communication with the vehicle control system or sensor systems; a control unit 16 configured to receive the image data 8, and the vehicle data 14, and to determine and generate control signals 18 for controlling the vehicle 2, wherein the control signals 18 comprise driving instructions.

The control unit 16 is configured to receive a working task to be performed by the working equipment when mounted on the vehicle, and that the working task includes information of an object 20 for the vehicle 2 to reach when performing the working task. The control unit 16 is further configured to:
- determine a target position 22, being a position based on the location of the object 20 to reach when performing the working task in the image data representation, in relation to said vehicle 2,
- calculate at least a first path 24 from the vehicle 2 to the target position 22 by applying a set of path calculation rules, and
- determine driving instructions such that said vehicle 2 is controlled to follow said at least first path 24, wherein the driving instructions are determined in dependence of said image data 8, and vehicle data 14, by applying a set of path following rules.

Above, the present invention relates a working equipment structured to be mounted on a vehicle. It should be noted that all embodiments disclosed above in relation to the vehicle are also applicable in relation to the working equipment. In particular the embodiments that relate to apply ambient condition data when determining driving instructions.

The present invention also relates to a method in relation to a vehicle comprising a working equipment, or to a method in relation to a working equipment structured to be mounted on a vehicle. The method will be discussed below with references to the flow diagram shown in figure 5. The vehicle and working equipment has been described in detail above and it is herein also referred to that description. Thus, the vehicle, or working equipment, further comprises:
- a sensor system configured to capture environmental data reflecting the environment around the vehicle and/or the working equipment, and to determine, based on said data, image data representing an area at least partly surrounding the vehicle/working equipment, and optionally ambient condition data,
- a vehicle data unit configured to determine vehicle data representing characteristics of the vehicle,
- a control unit configured to receive said image data, and said vehicle data, and optionally said ambient condition data, and to determine and generate control signals for controlling said vehicle, wherein said control signals comprise driving instructions,
- the control unit is configured to receive a working task to be performed by the vehicle, wherein said working task includes information of an object for the vehicle to reach when performing said working task.

With references to figure 5, the method comprises:
- determining a target position, being a position based on the location of the object to reach when performing said working task in said image data representation, in relation to said vehicle,
- calculating at least a first path from the vehicle to the target position by applying a set of path calculation rules,
- determining driving instructions such that said vehicle is controlled to follow said at least first path, wherein said driving instructions are determined in dependence of said image data, and vehicle data, by applying a set of path following rules.

The dashed line indicates that the method steps are optionally iterative, and may start again when moving towards an object.

According to one embodiment the sensor system is further configured to determine ambient condition data, and that the control unit is further configured to receive the ambient condition data. The method then further comprises determining driving instructions such that said vehicle is controlled to follow said at least first path, wherein the driving instructions are determined in dependence of the image data, ambient condition data, and vehicle data, by applying the set of path following rules.

According to one embodiment the method comprises that said ambient condition data comprises at least a ground surface parameter, e.g. a friction value, of the ground surface at the current position of the vehicle, and wherein one path following rule comprises using the ground surface parameter.

Preferably, the method comprises repeatedly determining the target position, calculating at least the first path, and determining the driving instructions, until the vehicle has reached the target position.

In a further embodiment, the method comprises identifying at least one reference point in said image data, wherein said reference point represents a fixed object in the environment surrounding the vehicle that is easy to identify, and not being the object for the vehicle to reach, and applying said at least one reference point when calculating said at least one first path, and wherein said at least one reference point is identified and applied during movement along said at least one first path in order to follow said at least one first path.

In an another embodiment the method further comprises determining the location of the object for the vehicle to reach when performing said working task in said image data representation, either as a result of manual input of an operator, or through an image analysis configured to detect candidate objects, and to identify a particular object, using object type information included in said working task.

And in still another embodiment of the method the driving instructions include at least a steering angle to be applied to the steering wheels of the vehicle, or instructions to a driver to perform a steering activity.

## Claims

1. A vehicle (2) comprising a working equipment (4), said vehicle further comprises:
- a sensor system (6) configured to capture environmental data reflecting the environment around the vehicle and to determine, based on said data, image data (8) representing an area at least partly surrounding the vehicle (2), wherein said sensor system is further configured to determine ambient condition data (10), and wherein said ambient condition data (10) comprises at least a ground surface parameter, e.g. a friction value, of the ground surface at the current position of the vehicle (2),
- a vehicle data unit (12) configured to determine vehicle data (14) representing characteristics of the vehicle (2),
- a control unit (16) configured to receive said image data (8), said ambient condition data (10), and said vehicle data (14), and to determine and generate control signals (18) for controlling said vehicle (2), wherein said control signals (18) comprise driving instructions,
- the control unit (16) is configured to receive a working task to be performed by the vehicle, wherein said working task includes information of an object (20) for the vehicle (2) to reach when performing said working task,
- determine a target position (22), being a position based on the location of the object (20) to reach when performing said working task in said image data representation, in relation to said vehicle (2),
- calculate at least a first path (24) from the vehicle (2) to the target position (22) by applying a set of path calculation rules, **characterized in that** said control unit (16) is further configured to:
- determine driving instructions such that said vehicle (2) is controlled to follow said at least first path (24), wherein said driving instructions are determined in dependence of said image data (8), ambient condition data (10), and vehicle data (14), by applying a set of path following rules, wherein one path following rule comprises using said ground surface parameter.

2. The vehicle (2) according to claim 1, wherein said control unit (16) is configured to repeatedly determine the target position (22), calculate at least the first path (24), and determine the driving instructions, until the vehicle (2) has reached the target position (22).

3. The vehicle (2) according to any of claims 1-2, wherein said control unit (16) is configured to identify at least one reference point (26) in said image data representation, wherein said reference point (26) represents a fixed object in the environment surrounding the vehicle (2) that is easy to identify, and not being the object (20) for the vehicle (2) to reach, and to apply said at least one reference point (26) when calculating said at least one first path (24), and wherein said at least one reference point (26) is identified and applied during movement along said at least one first path (24) in order to follow said at least one first path (24).

4. The vehicle (2) according to any of claims 1-3, wherein said control unit (16) is configured to determine the location of the object (20) for the vehicle (2) to reach when performing said working task in said image data representation, either as a result of manual input of an operator, or through an image analysis configured to detect candidate objects, and to identify a particular object, using object type information included in said working task.

5. The vehicle (2) according to any of claims 1-4, wherein said sensor system (6) comprises one or many of radar, LIDAR, 3D cameras, cameras, lasers, thermal cameras, and wherein said image data being data organized in a matrix to describe the spatial relationship of the surrounding with respect to what said sensor system (6) is measuring.

6. The vehicle (2) according to any of claims 1-5, wherein said vehicle data (14) comprises one or many of the number of wheels in contact with the ground, the location of wheels in contact with the ground relative to the vehicle, the weight of the vehicle, the center of mass of the vehicle, and the type of tires.

7. A working equipment (4) structured to be mounted on a vehicle (2), said working equipment comprises:
- a sensor system (6) configured to capture environmental data reflecting the environment around the working equipment and vehicle when mounted on the vehicle, and to determine, based on said data, image data (8) representing an area at least partly surrounding the working equipment and the vehicle (2), wherein said sensor system is further configured to determine ambient condition data (10), and wherein said ambient condition data (10) comprises at least a ground surface parameter, e.g. a friction value, of the ground surface at the current position of the vehicle (2),
- a vehicle data unit (12) configured to determine vehicle data (14) representing characteristics of the vehicle (2),
- a control unit (16) configured to receive said image data (8), said ambient condition data (10), and said vehicle data (14), and to determine and generate control signals (18) for controlling said vehicle (2), wherein said control signals (18) comprise driving instructions,
- the control unit (16) is configured to receive a working task to be performed by the working equipment when mounted on said vehicle, wherein said working task includes information of an object (20) for the vehicle (2) to reach when performing said working task,
- determine a target position (22), being a position based on the location of the object (20) to reach when performing said working task in said image data representation, in relation to said vehicle (2),
- calculate at least a first path (24) from the vehicle (2) to the target position (22) by applying a set of path calculation rules, **characterized in that** said control unit (16) is further configured to:
- determine driving instructions such that said vehicle (2) is controlled to follow said at least first path (24), wherein said driving instructions are determined in dependence of said image data (8), ambient condition data (10), and vehicle data (14), by applying a set of path following rules, wherein one path following rule comprises using said ground surface parameter.

8. A method in relation to a vehicle comprising a working equipment, or a working equipment structured to be mounted on a vehicle, said vehicle or working equipment comprises:
- a sensor system configured to capture environmental data reflecting the environment around the vehicle and/or the working equipment, and to determine, based on said data, image data representing an area at least partly surrounding the vehicle and/or the working equipment, wherein the sensor system is further configured to determine ambient condition data, wherein said ambient condition data comprises at least a ground surface parameter, e.g. a friction value, of the ground surface at the current position of the vehicle,
- a vehicle data unit configured to determine vehicle data representing characteristics of the vehicle,
- a control unit configured to receive said image data, said ambient condition data, and said vehicle data, and to determine and generate control signals for controlling said vehicle, wherein said control signals comprise driving instructions,
- the control unit is configured to receive a working task to be performed by the vehicle, wherein said working task includes information of an object for the vehicle to reach when performing said working task,
- determining a target position, being a position based on the location of the object to reach when performing said working task in said image data representation, in relation to said vehicle,
- calculating at least a first path from the vehicle to the target position by applying a set of path calculation rules, **characterized in that** said method further comprises the step of:
- determining driving instructions such that said vehicle is controlled to follow said at least first path, wherein said driving instructions are determined in dependence of said image data, ambient condition data, and vehicle data, by applying a set of path following rules, wherein one path following rule comprises using said ground surface parameter.

9. The method according to claim 8, further comprising repeatedly determining the target position, calculating at least the first path, and determining the driving instructions, until the vehicle has reached the target position.

10. The method according to any of claims 8-9, further comprising identifying at least one reference point in said image data, wherein said reference point represents a fixed object in the environment surrounding the vehicle that is easy to identify, and not being the object for the vehicle to reach, and applying said at least one reference point when calculating said at least one first path, and wherein said at least one reference point is identified and applied during movement along said at least one first path in order to follow said at least one first path.

## Patentansprüche

1. Fahrzeug (2), umfassend eine Arbeitsausrüstung (4), wobei das Fahrzeug ferner Folgendes umfasst:
- ein Sensorsystem (6), das dazu konfiguriert ist, Umfelddaten zu erfassen, die das Umfeld um das Fahrzeug widerspiegeln, und auf Grundlage der Daten Bilddaten (8) zu bestimmen, die einen Bereich darstellen, der das Fahrzeug (2) mindestens teilweise umgibt, wobei das Sensorsystem ferner dazu konfiguriert ist, Umgebungsbedingungsdaten (10) zu bestimmen, und wobei die Umgebungsbedingungsdaten (10) mindestens einen Bodenflächenparameter, z. B. einen Reibungswert, der Bodenfläche an der derzeitigen Position des Fahrzeugs (2) umfassen,
- eine Fahrzeugdateneinheit (12), die dazu konfiguriert ist, Fahrzeugdaten (14) zu bestimmen, die Eigenschaften des Fahrzeugs (2) darstellen,
- eine Steuereinheit (16), die dazu konfiguriert ist, die Bilddaten (8), die Umgebungsbedingungsdaten (10) und die Fahrzeugdaten (14) zu empfangen und Steuersignale (18) zum Steuern des Fahrzeugs (2) zu bestimmen und zu erzeugen, wobei die Steuersignale (18) Fahranweisungen umfassen,
- wobei die Steuereinheit (16) dazu konfiguriert ist, eine Arbeitsaufgabe zu empfangen, die durch das Fahrzeug durchzuführen ist, wobei die Arbeitsaufgabe Informationen eines Objekts (20), das von dem Fahrzeug (2) zu erreichen ist, wenn die Arbeitsaufgabe durchgeführt wird, beinhaltet,
- Bestimmen einer Zielposition (22), bei der es sich um eine Position auf Grundlage des Standorts des Objekts (20), das zu erreichen ist, wenn die Arbeitsaufgabe in der Bilddatendarstellung durchgeführt wird, in Bezug auf das Fahrzeug (2) handelt,
- Berechnen mindestens eines ersten Weges (24) von dem Fahrzeug (2) zur Zielposition (22) durch Anwenden eines Satzes von Wegberechnungsregeln, **dadurch gekennzeichnet, dass** die Steuereinheit (16) ferner zu Folgendem konfiguriert ist:
- Bestimmen von Fahranweisungen, sodass das Fahrzeug (2) derart gesteuert wird, dass es dem mindestens ersten Weg (24) folgt, wobei die Fahranweisungen in Abhängigkeit von den Bilddaten (8), Umgebungsbedingungsdaten (10) und Fahrzeugdaten (14) durch Anwenden eines Satzes von Wegfolgeregeln bestimmt werden, wobei eine Wegfolgeregel das Verwenden des Bodenflächenparameters umfasst.

2. Fahrzeug (2) nach Anspruch 1, wobei die Steuereinheit (16) dazu konfiguriert ist, wiederholt die Zielposition (22) zu bestimmen, mindestens den ersten Weg (24) zu berechnen und die Fahranweisungen zu bestimmen, bis das Fahrzeug (2) die Zielposition (22) erreicht hat.

3. Fahrzeug (2) nach einem der Ansprüche 1-2, wobei die Steuereinheit (16) dazu konfiguriert ist, mindestens einen Referenzpunkt (26) in der Bilddatendarstellung zu identifizieren, wobei der Referenzpunkt (26) ein festes Objekt in dem Umfeld, das das Fahrzeugs (2) umgibt, darstellt, das leicht zu identifizieren ist, und es sich nicht um das Objekt (20) handelt, das von dem Fahrzeug (2) zu erreichen ist, und den mindestens einen Referenzpunkt (26) anzuwenden, wenn der mindestens eine erste Weg (24) berechnet wird, und wobei der mindestens eine Referenzpunkt (26) während der Bewegung entlang des mindestens einen ersten Weges (24) identifiziert und angewendet wird, um dem mindestens einen ersten Weg (24) zu folgen.

4. Fahrzeug (2) nach einem der Ansprüche 1-3, wobei die Steuereinheit (16) dazu konfiguriert ist, den Standort des Objekts (20), das von dem Fahrzeug (2) zu erreichen ist, wenn die Arbeitsaufgabe in der Bilddatendarstellung durchgeführt wird, entweder als Ergebnis einer manuellen Eingabe eines Bedieners oder durch eine Bildanalyse, die dazu konfiguriert ist, in Frage kommende Objekte zu detektieren, zu bestimmen und ein bestimmtes Objekt zu identifizieren, und zwar unter Verwendung von Objekttypinformationen, die in der Arbeitsaufgabe beinhaltet sind.

5. Fahrzeug (2) nach einem der Ansprüche 1-4, wobei das Sensorsystem (6) eines oder viele von Radar, LIDAR, 3D-Kameras, Kameras, Lasern, Wärmekameras umfasst und wobei es sich bei den Bilddaten um Daten handelt, die in einer Matrix organisiert sind, um die räumliche Beziehung der Umgebung in Bezug darauf zu beschreiben, was das Sensorsystem (6) misst.

6. Fahrzeug (2) nach einem der Ansprüche 1-5, wobei die Fahrzeugdaten (14) eines oder viele der Anzahl an Rädern, die den Boden berühren, des Standorts der Räder, die den Boden berühren, relativ zu dem Fahrzeug, des Gewichts des Fahrzeugs, des Massenmittelpunkts des Fahrzeugs und des Reifentyps umfassen.

7. Arbeitsausrüstung (4), die strukturiert ist, um an einem Fahrzeug (2) montiert zu werden, wobei die Arbeitsausrüstung Folgendes umfasst:
- ein Sensorsystem (6), das dazu konfiguriert ist, Umfelddaten zu erfassen, die das Umfeld um die Arbeitsausrüstung und das Fahrzeug widerspiegeln, wenn es am Fahrzeug montiert ist, und auf Grundlage der Daten Bilddaten (8) zu bestimmen, die einen Bereich darstellen, der die Arbeitsausrüstung und das Fahrzeug (2) mindestens teilweise umgibt, wobei das Sensorsystem ferner dazu konfiguriert ist, Umgebungsbedingungsdaten (10) zu bestimmen, und wobei die Umgebungsbedingungsdaten (10) mindestens einen Bodenflächenparameter, z. B. einen Reibungswert, der Bodenfläche an der derzeitigen Position des Fahrzeugs (2) umfassen,
- eine Fahrzeugdateneinheit (12), die dazu konfiguriert ist, Fahrzeugdaten (14) zu bestimmen, die Eigenschaften des Fahrzeugs (2) darstellen,
- eine Steuereinheit (16), die dazu konfiguriert ist, die Bilddaten (8), die Umgebungsbedingungsdaten (10) und die Fahrzeugdaten (14) zu empfangen und Steuersignale (18) zum Steuern des Fahrzeugs (2) zu bestimmen und zu erzeugen, wobei die Steuersignale (18) Fahranweisungen umfassen,
- wobei die Steuereinheit (16) dazu konfiguriert ist, eine Arbeitsaufgabe zu empfangen, die durch die Arbeitsausrüstung durchzuführen ist, wenn sie am Fahrzeug montiert ist, wobei die Arbeitsaufgabe Informationen eines Objekts (20), das von dem Fahrzeug (2) zu erreichen ist, wenn die Arbeitsaufgabe durchgeführt wird, beinhaltet,
- Bestimmen einer Zielposition (22), bei der es sich um eine Position auf Grundlage des Standorts des Objekts (20), das zu erreichen ist, wenn die Arbeitsaufgabe in der Bilddatendarstellung durchgeführt wird, in Bezug auf das Fahrzeug (2) handelt,
- Berechnen mindestens eines ersten Weges (24) von dem Fahrzeug (2) zur Zielposition (22) durch Anwenden eines Satzes von Wegberechnungsregeln, **dadurch gekennzeichnet, dass** die Steuereinheit (16) ferner zu Folgendem konfiguriert ist:
- Bestimmen von Fahranweisungen, sodass das Fahrzeug (2) derart gesteuert wird, dass es dem mindestens ersten Weg (24) folgt, wobei die Fahranweisungen in Abhängigkeit von den Bilddaten (8), Umgebungsbedingungsdaten (10) und Fahrzeugdaten (14) durch Anwenden eines Satzes von Wegfolgeregeln bestimmt werden, wobei eine Wegfolgeregel das Verwenden des Bodenflächenparameters umfasst.

8. Verfahren in Bezug auf ein Fahrzeug, das eine Arbeitsausrüstung umfasst, oder eine Arbeitsausrüstung, die strukturiert ist, um an einem Fahrzeug montiert zu werden, wobei das Fahrzeug oder die Arbeitsausrüstung Folgendes umfasst:
- ein Sensorsystem, das dazu konfiguriert ist, Umfelddaten zu erfassen, die das Umfeld um das Fahrzeug und/oder die Arbeitsausrüstung widerspiegeln, und auf Grundlage der Daten Bilddaten zu bestimmen, die einen Bereich darstellen, der das Fahrzeug und/oder die Arbeitsausrüstung mindestens teilweise umgibt, wobei das Sensorsystem ferner dazu konfiguriert ist, Umgebungsbedingungsdaten zu bestimmen, wobei die Umgebungsbedingungsdaten mindestens einen Bodenflächenparameter, z. B. einen Reibungswert, der Bodenfläche an der derzeitigen Position des Fahrzeugs umfassen,
- eine Fahrzeugdateneinheit, die dazu konfiguriert ist, Fahrzeugdaten zu bestimmen, die Eigenschaften des Fahrzeugs darstellen,
- eine Steuereinheit, die dazu konfiguriert ist, die Bilddaten, die Umgebungsbedingungsdaten und die Fahrzeugdaten zu empfangen und Steuersignale zum Steuern des Fahrzeugs zu bestimmen und zu erzeugen, wobei die Steuersignale Fahranweisungen umfassen,
- wobei die Steuereinheit dazu konfiguriert ist, eine Arbeitsaufgabe zu empfangen, die durch das Fahrzeug durchzuführen ist, wobei die Arbeitsaufgabe Informationen eines Objekts, das von dem Fahrzeug zu erreichen ist, wenn die Arbeitsaufgabe durchgeführt wird, beinhaltet,
- Bestimmen einer Zielposition, bei der es sich um eine Position auf Grundlage des Standorts des Objekts, das zu erreichen ist, wenn die Arbeitsaufgabe in der Bilddatendarstellung durchgeführt wird, in Bezug auf das Fahrzeug handelt,
- Berechnen mindestens eines ersten Weges von dem Fahrzeug zur Zielposition durch Anwenden eines Satzes von Wegberechnungsregeln, **dadurch gekennzeichnet, dass** das Verfahren ferner den folgenden Schritt umfasst:
- Bestimmen von Fahranweisungen, sodass das Fahrzeug derart gesteuert wird, dass es dem mindestens ersten Weg folgt, wobei die Fahranweisungen in Abhängigkeit von den Bilddaten, Umgebungsbedingungsdaten und Fahrzeugdaten durch Anwenden eines Satzes von Wegfolgeregeln bestimmt werden, wobei eine Wegfolgeregel das Verwenden des Bodenflächenparameters umfasst.

9. Verfahren nach Anspruch 8, ferner umfassend wiederholtes Bestimmen der Zielposition, Berechnen mindestens des ersten Weges und Bestimmen der Fahranweisungen, bis das Fahrzeug die Zielposition erreicht hat.

10. Verfahren nach einem der Ansprüche 8-9, ferner umfassend Identifizieren mindestens eines Referenzpunkts in den Bilddaten, wobei der Referenzpunkt ein festes Objekt in dem Umfeld, das das Fahrzeug umgibt, darstellt, das leicht zu identifizieren ist, und es sich nicht um das Objekt handelt, das von dem Fahrzeug zu erreichen ist, und Anwenden des mindestens einen Referenzpunkts, wenn der mindestens eine erste Weg berechnet wird, und wobei der mindestens eine Referenzpunkt während der Bewegung entlang des mindestens einen ersten Weges identifiziert und angewendet wird, um dem mindestens einen ersten Weg zu folgen.

## Revendications

1. Véhicule (2) comprenant un équipement de travail (4), ledit véhicule comprenant en outre :
- un système de capteur (6) configuré pour capturer des données environnementales qui reflètent l'environnement autour du véhicule et pour déterminer, sur la base desdites données, des données d'image (8) qui représentent une zone qui entoure au moins partiellement le véhicule (2), dans lequel ledit système de capteur est en outre configuré pour déterminer des données de conditions ambiantes (10), et dans lequel lesdites données de conditions ambiantes (10) comprennent au moins un paramètre de surface du sol, comme une valeur de frottement, de la surface du sol à l'emplacement actuel du véhicule (2),
- une unité de données de véhicule (12) configurée pour déterminer des données de véhicule (14) qui représentent des caractéristiques du véhicule (2),
- une unité de commande (16) configurée pour recevoir lesdites données d'image (8), lesdites données de conditions ambiantes (10), et lesdites données de véhicule (14), et pour déterminer et générer des signaux de commande (18) destinés à contrôler ledit véhicule (2), dans lequel lesdits signaux de commande (18) comprennent des instructions de conduite,
- l'unité de commande (16) est configurée pour recevoir une tâche de travail à exécuter par le véhicule, dans lequel ladite tâche de travail comprend des informations sur un objet (20) que le véhicule (2) doit atteindre lors de l'exécution de ladite tâche de travail,
- la détermination d'une position cible (22), qui est une position qui repose sur l'emplacement de l'objet (20) à atteindre lors de l'exécution de ladite tâche de travail, dans ladite représentation de données d'image, en lien avec ledit véhicule (2),
- le calcul d'au moins un premier trajet (24) entre le véhicule (2) et la position cible (22) en appliquant un ensemble de règles de calcul de trajet, **caractérisé en ce que** ladite unité de commande (16) est en outre configurée pour :
- déterminer des instructions de conduite de sorte que ledit véhicule (2) soit contrôlé afin de suivre ledit au moins premier trajet (24), dans lequel lesdites instructions de conduite sont déterminées selon lesdites données d'image (8), lesdites données de conditions ambiantes (10), et lesdites données de véhicule (14), en appliquant un ensemble de règles de suivi de trajet, dans lequel une règle de suivi de trajet comprend l'utilisation dudit paramètre de surface du sol.

2. Véhicule (2) selon la revendication 1, dans lequel ladite unité de commande (16) est configurée pour déterminer de manière répétée la position cible (22), pour calculer au moins le premier trajet (24), et pour déterminer les instructions de conduite, jusqu'à ce que le véhicule (2) atteigne la position cible (22).

3. Véhicule (2) selon l'une quelconque des revendications 1 à 2, dans lequel ladite unité de commande (16) est configurée pour identifier au moins un point de référence (26) dans ladite représentation de données d'image, dans lequel ledit point de référence (26) représente un objet fixe dans l'environnement qui entoure le véhicule (2) qui est facile à identifier, et qui n'est pas l'objet (20) que le véhicule (2) doit atteindre, et pour appliquer ledit au moins un point de référence (26) lors du calcul dudit au moins un premier trajet (24), et dans lequel ledit au moins un point de référence (26) est identifié et appliqué pendant le déplacement le long dudit au moins premier trajet (24) afin de suivre ledit au moins un premier trajet (24).

4. Véhicule (2) selon l'une quelconque des revendications 1 à 3, dans lequel ladite unité de commande (16) est configurée pour déterminer l'emplacement de l'objet (20) que le véhicule (2) doit atteindre lors de l'exécution de ladite tâche de travail dans ladite représentation de données d'image, soit à la suite d'une saisie manuelle d'un opérateur, soit par une analyse d'image configurée pour détecter des objets candidats, et pour identifier un objet particulier, à l'aide d'informations de type d'objet incluses dans ladite tâche de travail.

5. Véhicule (2) selon l'une quelconque des revendications 1 à 4, dans lequel ledit système de capteur (6) comprend un ou plusieurs d'un radar, d'un LIDAR, de caméras 3D, de caméras, de laser, de caméras thermiques, et dans lequel lesdites données d'image sont des données organisées en une matrice afin de décrire la relation spatiale de l'environnement par rapport à ce que ledit système de capteur (6) mesure.

6. Véhicule (2) selon l'une quelconque des revendications 1 à 5, dans lequel lesdites données de véhicule (14) comprennent un ou plusieurs du nombre de roues en contact avec le sol, de l'emplacement des roues en contact avec le sol par rapport au véhicule, du poids du véhicule, du centre de gravité du véhicule, et du type de pneumatiques.

7. Équipement de travail (4) structuré pour être installé sur un véhicule (2), ledit équipement de travail comprenant :
- un système de capteur (6) configuré pour capturer des données environnementales qui reflètent l'environnement autour de l'équipement de travail et du véhicule lorsqu'il est installé sur le véhicule, et pour déterminer, sur la base desdites données, des données d'image (8) qui représentent une zone qui entoure au moins partiellement l'équipement de travail et le véhicule (2), dans lequel ledit système de capteur est en outre configuré pour déterminer des données de conditions ambiantes (10), et dans lequel lesdites données de conditions ambiantes (10) comprennent au moins un paramètre de surface du sol, comme une valeur de frottement, de la surface du sol à l'emplacement actuel du véhicule (2),
- une unité de données de véhicule (12) configurée pour déterminer des données de véhicule (14) qui représentent des caractéristiques du véhicule (2),
- une unité de commande (16) configurée pour recevoir lesdites données d'image (8), lesdites données de conditions ambiantes (10), et lesdites données de véhicule (14), et pour déterminer et générer des signaux de commande (18) destinés à contrôler ledit véhicule (2), dans lequel lesdits signaux de commande (18) comprennent des instructions de conduite,
- l'unité de commande (16) est configurée pour recevoir une tâche de travail à exécuter par l'équipement de travail lorsqu'il est installé sur ledit véhicule, dans lequel ladite tâche de travail comprend des informations sur un objet (20) que le véhicule (2) doit atteindre lors de l'exécution de ladite tâche de travail,
- la détermination d'une position cible (22), qui est une position qui repose sur l'emplacement de l'objet (20) à atteindre lors de l'exécution de ladite tâche de travail, dans ladite représentation de données d'image, en lien avec ledit véhicule (2),
- le calcul d'au moins un premier trajet (24) entre le véhicule (2) et la position cible (22) en appliquant un ensemble de règles de calcul de trajet, **caractérisé en ce que** ladite unité de commande (16) est en outre configurée pour :
- déterminer des instructions de conduite de sorte que ledit véhicule (2) soit contrôlé afin de suivre ledit au moins premier trajet (24), dans lequel lesdites instructions de conduite sont déterminées selon lesdites données d'image (8), lesdites données de conditions ambiantes (10), et lesdites données de véhicule (14), en appliquant un ensemble de règles de suivi de trajet, dans lequel une règle de suivi de trajet comprend l'utilisation dudit paramètre de surface du sol.

8. Procédé en lien avec un véhicule comprenant un équipement de travail, ou un équipement de travail à installer sur un véhicule, ledit véhicule ou équipement de travail comprenant :
- un système de capteur configuré pour capturer des données environnementales qui reflètent l'environnement autour du véhicule et/ou de l'équipement de travail, et pour déterminer, sur la base desdites données, des données d'image qui représentent une zone qui entoure au moins partiellement le véhicule et/ou l'équipement de travail, dans lequel le système de capteur est en outre configuré pour déterminer des données de conditions ambiantes, dans lequel lesdites données de conditions ambiantes comprennent au moins un paramètre de surface du sol, comme une valeur de frottement, de la surface du sol à l'emplacement actuel du véhicule,
- une unité de données de véhicule configurée pour déterminer des données de véhicule qui représentent des caractéristiques du véhicule,
- une unité de commande configurée pour recevoir lesdites données d'image, lesdites données de conditions ambiantes, et lesdites données de véhicule, et pour déterminer et générer des signaux de commande destinés à contrôler ledit véhicule, dans lequel lesdits signaux de commande comprennent des instructions de conduite,
- l'unité de commande est configurée pour recevoir une tâche de travail à exécuter par le véhicule, dans lequel ladite tâche de travail comprend des informations sur un objet que le véhicule doit atteindre lors de l'exécution de ladite tâche de travail,
- la détermination d'une position cible, qui est une position qui repose sur l'emplacement de l'objet à atteindre lors de l'exécution de ladite tâche de travail dans ladite représentation de données d'image, en lien avec ledit véhicule,
- le calcul d'au moins un premier trajet entre le véhicule et la position cible en appliquant un ensemble de règles de calcul de trajet, **caractérisé en ce que** ledit procédé comprend en outre l'étape qui consiste à :
- déterminer des instructions de conduite de sorte que ledit véhicule soit contrôlé afin de suivre ledit au moins premier trajet, dans lequel lesdites instructions de conduite sont déterminées selon lesdites données d'image, lesdites données de conditions ambiantes, et lesdites données de véhicule, en appliquant un ensemble de règles de suivi de trajet, dans lequel une règle de suivi de trajet comprend l'utilisation dudit paramètre de surface du sol.

9. Procédé selon la revendication 8, comprenant en outre la détermination, de manière répétée, de la position cible, le calcul d'au moins le premier trajet, et la détermination des instructions de conduite, jusqu'à ce que le véhicule atteigne la position cible.

10. Procédé selon l'une quelconque des revendications 8 à 9, comprenant en outre l'identification d'au moins un point de référence dans lesdites données d'image, dans lequel ledit point de référence représente un objet fixe dans l'environnement qui entoure le véhicule qui est facile à identifier, et qui n'est pas l'objet que le véhicule doit atteindre, et l'application dudit au moins un point de référence lors du calcul dudit au moins un premier trajet, et dans lequel ledit au moins un point de référence est identifié et appliqué pendant le déplacement le long dudit au moins premier trajet afin de suivre ledit au moins un premier trajet.
